# EUROPÄISCHE PATENTSCHRIFT

(11) **EP 3 106 024 B1**
(45) Veröffentlichungstag und Bekanntmachung des Hinweises auf die Patenterteilung: **05.02.2020**
(21) Anmeldenummer: 16171869.7
(22) Anmeldetag: 30.05.2016
(51) Int. Cl.: A01F 15/18

(54) **RUNDBALLENPRESSE MIT MITTELN ZUR FÜHRUNG EINES PRESSRIEMENS**
ROUND BALER WITH MEANS FOR GUIDING A COMPRESSION BELT
PRESSE À BALLES RONDES AVEC DES MOYENS POUR LE GUIDAGE D'UNE COURROIE DE PRESSE

(30) Priorität: 16.06.2015 DE 102015211034
(43) Veröffentlichungstag der Anmeldung: 21.12.2016
(73) Patentinhaber: Deere & Company, Moline, IL 61265 (US)
(72) Erfinder: Pourchet, Jeremy, 70100 Chargey-lès-Gray (FR); Marques, Manuel, 70190 Grandvelle-et-le-Perrenot (FR)
(74) Vertreter: Holst, Sönke

(56) Entgegenhaltungen:
- EP-A1- 0 095 690
- US-A- 4 035 999
- US-A- 4 143 505

## Beschreibung

Die Erfindung betrifft eine Rundballenpresse mit einem Ballenpressraum, der von einem Pressmittel in Form eines einzigen Pressriemens oder mehrerer, nebeneinander angeordneter Pressriemen umgeben ist, wobei das Pressmittel an einer antreibbaren Walze und an frei mitlaufenden Walzen anliegt, von denen mindestens eine vorgespannte Walze durch Vorspannmittel im Sinne einer Straffung des Pressmittels in der Weise beaufschlagt ist, dass sie die vorgespannte Walze umso stärker vorspannen, je weiter diese sich in einer zur Lockerung des Pressmittels führenden Richtung bewegt.

### Stand der Technik

Rundballenpressen finden Verwendung, um aus halmförmigem landwirtschaftlichem Erntegut Ballen herzustellen. Derartige Rundballenpressen weisen einen Ballenpressraum und zugehörige Pressmittel auf. Nach der Fertigstellung und ggf. Umwicklung eines Ballens mit Netz, Garn oder einer Folie wird dieser nach hinten aus dem Ballenpressraum ausgeworfen.

Der Ballenpressraum wird bei vielen Rundballenpressen, insbesondere bei solchen mit variabler Ballengröße, teilweise oder komplett durch einen oder mehrere Pressriemen umschlossen. Der oder die Pressriemen laufen um Walzen um, von denen mindestens eine antreibbar ist. Einige der Walzen sind am Rahmen der Rundballenpresse abgestützt und andere gegenüber dem Rahmen durch Federkraft beweglich, um den Ballenpressraum dem sich nach und nach anwachsenden Ballen anzupassen und ein Auswerfen eines fertiggestellten Ballens zu ermöglichen. Hierzu sei auf die Dokumente US 4 035 999 A, EP 0 095 690 A1 und US 4 143 505 A verwiesen, in denen jeweils Rundballenpressen gezeigt werden, deren Pressmittel durch Walzen gespannt werden, die durch Federn vorgespannt werden, wobei jedem Ende der Walze eine Feder zugeordnet ist. Die Enden der Walzen bewegen sich jedoch durch Querverbindungen bedingt gemeinsam.

Die teils angetriebenen, zum anderen Teil frei mitlaufenden Walzen erstrecken sich quer zur Vorwärtsrichtung und zur Achse des Ballens. Üblicherweise ist eine Anzahl schmalerer Pressriemen über die Breite des Ballenpressraums verteilt oder es wird ein einziger, breiter Pressriemen verwendet (vgl. US 5 941 168 A1).

Da eine über die Breite des Ballenpressraums ungleichmäßige Beaufschlagung mit Erntegut oder eine Verlagerung des Ernteguts zu einer Seite bei Arbeiten am Hang zu einer seitlichen Verschiebung der Pressriemen führt, was ein unerwünschtes Schleifen der Pressriemen an der Seitenwand der Rundballenpresse und unrichtige Messwerte eines mit dem Pressriemen zusammenwirkenden Sensors zur Erfassung der Ballengröße zur Folge haben kann, sind Führungen für die Pressriemen vorgeschlagen worden, die aus starren Elementen bestehen, an denen der Pressriemen seitlich anliegt (US 5 261 323 A1). Auch wurde vorgeschlagen, auf einer der Walzen radial überstehende Ringe anzubringen, sodass die einzelnen Pressriemen jeweils zwischen zwei Ringen hindurch laufen (US 3 992 987 A1). Weiterhin wurde vorgeschlagen, die seitliche Führung des Riemens durch genutete Rollen zu bewerkstelligen, die seitlich unmittelbar vor einer angetriebenen Walze an den Riemen anliegen (DE 10 2011 003 727 A1).

Die US 3 687 273 A beschreibt ein Förderband, bei dem die seitliche Position des Riemens durch seitlich daran anliegende Rollen erfasst wird. Die Rollen steuern eine federnd am Gestell abgestützte Halterung, an der eine Umlenkwalze des Riemens gelagert ist, derart an, dass der Riemen an der Seite, zu welcher der Riemen läuft, stärker durch die Umlenkwalze vorgespannt wird. Dadurch soll der Riemen zentrisch auf der Umlenkwalze geführt werden.

### Aufgabe

Die bekannten Mittel zur seitlichen Führung von Pressriemen bedingen jeweils eine erhöhte Reibung des Riemens an den Führungsmitteln, die einerseits Antriebsenergie erfordert und andererseits Verschleiß des Riemens zur Folge hat.

Das der Erfindung zu Grunde liegende Problem wird darin gesehen, eine Rundballenpresse bereitzustellen, bei der die oben erwähnten Nachteile nicht oder in einem verminderten Maß vorliegen.

### Lösung

Die vorliegende Erfindung wird durch die Patentansprüche definiert.

Eine Rundballenpresse ist mit einem Ballenpressraum versehen, der von einem Pressmittel in Form eines einzigen Pressriemens oder mehrerer, direkt oder nur relativ kleine Spalte bildend nebeneinander angeordneter Pressriemen umgeben ist. Das Pressmittel liegt an einer antreibbaren Walze und an frei mitlaufenden Walzen an, von denen mindestens eine vorgespannte Walze durch Vorspannmittel im Sinne einer Straffung des Pressmittels beaufschlagt ist. Die Vorspannmittel sind derart gestaltet, dass sie die vorgespannte Walze umso stärker vorspannen, je weiter diese sich in einer zur Lockerung des Pressmittels führenden Richtung bewegt. Sie haben demnach eine ansteigende Kennlinie, wie sie durch eine Feder oder einen positionserfassenden Sensor gesteuerten Hydraulikzylinder erreicht werden kann. Die beiden Enden der vorgespannten Walze sind jeweils durch zugeordnete Vorspannmittel vorgespannt und unabhängig voneinander beweglich.

Das Pressmittel läuft demnach um die an beiden Enden getrennt voneinander vorgespannte Walze um. Falls das Pressmittel nun - beispielsweise aufgrund eines nicht-zylindrischen Ballens - über seine Breite ungleichmäßig stark in sich gespannt sein sollte, was dazu führen kann, dass es von seiner gewünschten Position auf der vorgespannten Walze abweicht, wird die vorgespannte Walze gegen die Vorspannung der Vorspannmittel an der größeren Seite des Ballens weiter (in die zur Lockerung der Pressmittel führenden Richtung) ausgelenkt als an der anderen Seite. Dadurch steigt (aufgrund der ansteigenden Kennlinie der Vorspannmittel) auf der größeren Seite des Ballens die Vorspannkraft der Vorspannmittel an, was wiederum dazu führt, dass sich Material des Ballens und, falls sie ihre Sollposition verlassen haben, auch die Pressmittel in die andere Richtung bewegen, bis sie wieder ihre gewünschte Position erreicht haben. Auf diese Weise erreicht man auch ohne seitliche Führungen und ohne Mittel zur Positionserfassung des Pressmittels, dass die Pressmittel auch bei nicht-zylindrischen Ballen auf der vorgespannten Walze und somit auch auf den anderen Walzen in ihrer seitlichen Sollposition verbleiben.

Die vorgespannte Walze kann beidendig an jeweils einer Halterung befestigt sein, die schwenkbar am Gestell der Rundballenpresse angelenkt und mit den Vorspannmitteln gekoppelt sind.

Die Positionen der Enden der vorgespannten Walze können durch je einen Sensor erfassbar sein. Die Signale der Sensoren können dem Bediener angezeigt werden, damit er das Zugfahrzeug und die Ballenpresse im Sinne des Erreichens eines zylindrischen Ballens über das Feld lenken kann, oder von einer Lenkautomatik im erwähnten Sinne verwendet werden.

### Ausführungsbeispiel

In den Zeichnungen ist ein nachfolgend näher beschriebenes Ausführungsbeispiel der Erfindung dargestellt, wobei die Bezugszeichen nicht zu einer einschränkenden Auslegung der Ansprüche herangezogen werden sollen. Es zeigt:
- Fig. 1: eine schematische seitliche Ansicht einer Rundballenpresse,
- Fig. 2: eine schematische Vorderansicht einer vorgespannten Walze der Rundballenpresse bei ordnungsgemäß laufendem Pressmittel, und
- Fig. 3: eine schematische Vorderansicht einer vorgespannten Walze der Rundballenpresse bei nach links vom ordnungsgemäßen Weg abweichendem Pressmittel.

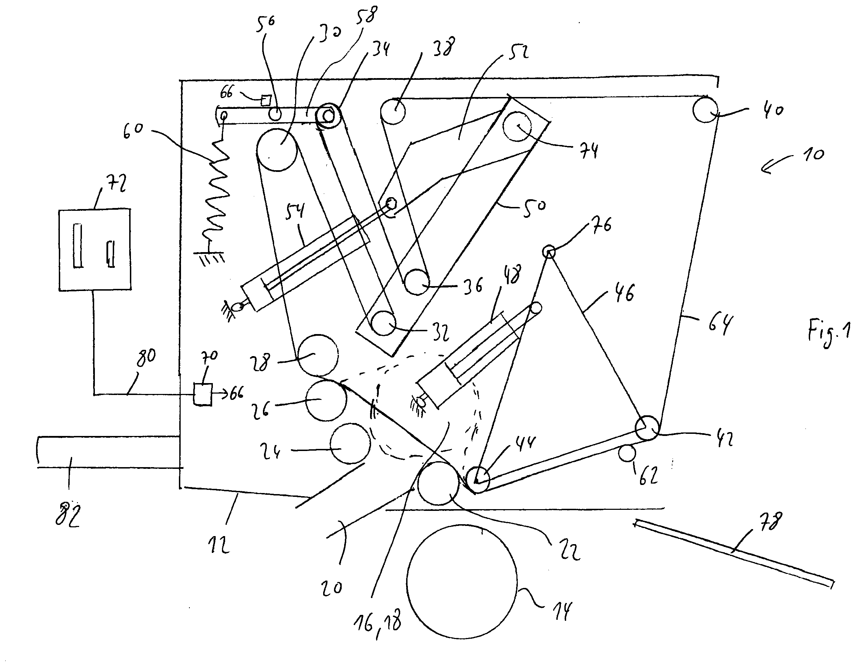

Die Figur 1 zeigt eine schematische seitliche Ansicht einer Rundballenpresse 10, die ein Gestell 12 umfasst, das sich auf Rädern 14 abstützt und mittels einer Deichsel 82 durch ein nicht gezeigtes Zugfahrzeug über ein Feld in ihrer Vorwärtsrichtung, die in der Figur 1 nach links verläuft, gezogen werden kann, um Erntegut mittels eines nicht gezeigten Aufnehmers aufzusammeln und über einen Einlasskanal 20 in einen Ballenpressraum 16 zu fördern, in dem dann sukzessive ein Ballen 18 entsteht. Der Ballenpressraum 16 wird durch im Gestell 12 drehbar gelagerte Walzen 22, 24, 26 begrenzt, die dem Einlasskanal 20 benachbart sind. Zudem wird der Ballenpressraum 16 durch ein endloses Pressmittel 64 in Form eines oder mehrerer, seitlich nebeneinander angeordneter Riemen begrenzt, der oder die weitere Walzen 28, 30, 32, 34, 36, 38, 40, 42, 62 und 44 sowie die Walze 22 teilweise umschließt, von denen eine (z.B. die Walze 30), mehrere oder alle während der Erstellung eines Ballens 18 rotativ angetrieben werden und die anderen frei mitlaufen. Die Walzen 28, 30, 38, 40 und 22 sind im Gestell 12 drehbar gelagert, d.h. abgesehen von ihrer Rotation um die Längsachse bewegen sie sich gegenüber dem Gestell 12 nicht, wenn ein Ballen 18 erstellt wird.

Die Walzen 32 und 36 sind an ihren beiden Enden jeweils an einem Träger 50 angebracht, der an dessen oberem Ende um eine Achse 7 4 schwenkbar am Gestell 12 angelenkt ist. Der Träger 50 ist mit einem Arm 52 starr gekoppelt, der mittels eines Hydraulikzylinders 54 vorgespannt ist. Der Träger 50 bewegt sich somit während der Erstellung eines Ballens 18 gegen einen im Kolbenstangenraum des Hydraulikzylinders 54 vorliegenden, eingestellten Druck nach oben, wenn ein Ballen 18 entsteht und dabei den Ballenpressraum 16 nach und nach größer wird, indem die den Ballenpressraum 16 nach oben und hinten hin begrenzenden Pressmittel 64 nach und nach ausweichen, wie in der Figur 1 mit gestrichelten Linien dargestellt ist.

Die Walzen 42, 62 und 42 sind an einem Schwenkteil 46 befestigt, der durch einen Aktor 48 in Form eines Hydraulikzylinders um eine obere Achse 76 nach hinten und oben verschwenkbar ist, um einen Ballen 18 aus dem Ballenpressraum 16 auszuwerfen. Der Ballen 18 rollt dann auf einer Abladerampe 78 auf den Erdboden.

Die vorgespannte Walze 34 ist an einer Halterung 58 drehbar gelagert, die etwa in ihrer Mitte um eine Achse 56 schwenkbar am Gestell 12 angelenkt ist und durch eine Feder 60 vorgespannt ist. Die Feder 60 ist bestrebt, die das Pressmittel 64 zu spannen, indem sie die vorgespannte Walze 34 im Gegenuhrzeigersinn nach oben zieht, und zwar umso stärker, umso weiter die vorgespannte Walze 34 sich nach unten, d.h. in Richtung einer Lockerung des Pressmittels 64 bewegt. Auf der anderen Seite der Rundballenpresse 10 befindet sich zudem eine weitere Halterung 58, an der die vorgespannte Walze 34 drehbar gelagert ist und eine weitere Feder 60, die von den in der Figur 1 gezeigten Bauelementen (Halterung 58 und Feder 60) unabhängig sind und sich somit unabhängig davon bewegen können.

Die Rundballenpresse 10 ist an sich im Wesentlichen aus EP 1 396 187 A1 und EP 1 364 574 A1 bekannt, deren Offenbarung durch Verweis mit in die vorliegenden Unterlagen aufgenommen wird.

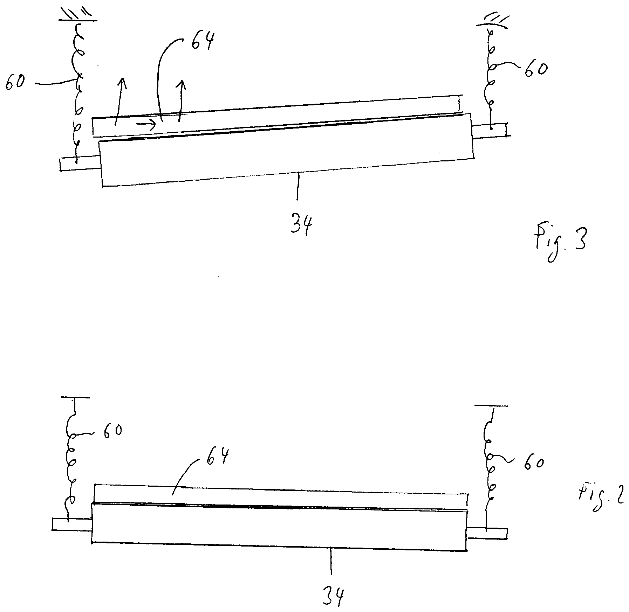

Die Wirkungsweise der an ihren beiden Enden unabhängig voneinander vorgespannten Walze 34 ist in den Figuren 2 und 3 gezeigt. In den Figuren 2 und 3 ist die Halterung 58 aus Gründen der Veranschaulichung nicht gezeigt, sodass die Federn 60 in den schematischen Darstellungen direkt an der Achse der vorgespannten Walze 34 angreifen und letztere beidendig nach oben ziehen (wie es auch in der Figur 1 der Fall ist). In der Situation nach Figur 2 läuft das Pressmittel 64 symmetrisch zur vorgespannten Walze 34.

Sollte nun der entstehende Ballen 18 z.B. aufgrund unsymmetrischer Zuführung des Ernteguts in den Ballenpressraum 16 oder an einem Seitenhang nicht zylindrisch, sondern konisch sein, führt das zu der Situation nach Figur 3, bei der die linke Seite des Ballens 18 einen größeren Durchmesser als dessen rechte Seite hat. Der Ballen 18 spannt das Pressmittel 64 somit links stärker als rechts. Da das Pressmittel 64 in sich so gut wie überhaupt nicht elastisch ist, kann es selbst die unterschiedliche Spannung nicht in sich aufnehmen, sondern es zieht die Walze 34 links weiter gegen die Kraft der Feder 60 nach unten als rechts. Somit bewegt sich die linke Seite der Walze 34 sich nach unten und die linke Feder 60 ist stärker gespannt als die rechte Feder 60. Dabei kann sich das Pressmittel 64 auf der Walze 34 geringfügig nach links bewegen, wie in der Figur 3 zu Illustrationszwecken übertrieben dargestellt. Die entstehenden, auf das Pressmittel 64 wirkenden Kräfte sind in der Figur 3 durch Pfeile angedeutet: Je weiter man nach links kommt, umso größer wird die das Pressmittel 64 nach oben ziehende Kraft, da ja die linke Feder 60 die Walze 34 stärker nach oben zieht als die rechte Feder 60. Das führt zu einer Kraftkomponente, die das Pressmittel 64 auf der Walze 34 wieder nach rechts zieht. Gleichzeitig wird sich auch das Material in der Ballenpresskammer 16 nach rechts bewegen, da es durch die Pressmittel 64 im linken Teil der Ballenpresskammer 16 stärker als im rechten Teil zusammengedrückt wird. Im Ergebnis wird man schließlich wieder die Situation nach Figur 2 erhalten.

Sollte das Pressmittel 64 nach rechts abweichen, wäre die Wirkungsweise analog, nur in die andere Richtung.

Zur Erkennung der wirkenden Federkräfte dienen zwei Sensoren 66, welche jeweils die Drehstellung der Halterung 58 um die Achse 56 auf einer anderen Seite der Rundballenpresse 10 erfassen. Die Federkräfte hängen von der Zugkraft im Pressmittel 64 ab, die wiederum von der Größe des Ballens 18 abhängt. Die Sensoren 66 sind insbesondere als Potentiometer oder beliebiger anderer Drehwinkelsensor ausgeführt. Die Sensoren 66 sind mit einer Auswertungsschaltung 70 verbunden. Da sich die Sensoren 66 unabhängig voneinander bewegen können, werden bei nicht-zylindrischen Ballen 18 durch die beiden Sensoren 66 unterschiedliche Werte erfasst werden. Die Ausgangswerte der Sensoren 66 werden durch die Auswertungsschaltung 70 an eine Anzeigeeinrichtung 72 übertragen, die sich insbesondere in der Kabine des Zugfahrzeugs befinden kann. Hierzu wird insbesondere auf eine Busleitung 80 zurückgegriffen. Der Bediener erkennt somit die Form des Ballens 72 auf der Anzeigeeinrichtung 72 anhand zweier Balkendiagramme oder einer beliebigen anderen Darstellung und kann, wenn die Balken nicht gleich groß sind, gegenlenken, um einen zylindrischen Ballen zu erzeugen. Diese Aufgabe kann auch durch eine Automatik übernommen werden. Hierzu sei auf die EP 1 813 146 A2 verwiesen, deren Offenbarung durch Verweis mit in die vorliegenden Unterlagen aufgenommen wird.

Weiterhin kann das Signal der Sensoren 66 dazu dienen, eine Überlastung der Rundballenpresse 10 zu erkennen. Falls das Ausgangssignal des Sensors 66 somit darauf hinweist, dass ein Schwellenwert überschritten wird, der einer maximalen Zugkraft im Pressmittel 64 entspricht, kann dem Bediener über die Anzeigeeinrichtung 72 ein Warnhinweis gegeben werden und/oder es wird selbsttätig der Druck im Kolbenstangenraum des Hydraulikzylinders 54 und somit die Spannung im Pressmittel 64 heruntergesetzt. Hierzu kann ein Proportionalventil (nicht gezeigt) entsprechend angesteuert werden.

## Patentansprüche

1. Rundballenpresse (10) mit einem Ballenpressraum (16), der von einem Pressmittel (64) in Form eines einzigen Pressriemens oder mehrerer, nebeneinander angeordneter Pressriemen umgeben ist, wobei das Pressmittel (64) an einer antreibbaren Walze (30) und an frei mitlaufenden Walzen (28, 32, 34, 36, 38, 40, 42, 62, 44, 22) anliegt, von denen mindestens eine vorgespannte Walze (34) durch Vorspannmittel im Sinne einer Straffung des Pressmittels in der Weise beaufschlagt ist, dass sie die vorgespannte Walze (34) umso stärker vorspannen, je weiter diese sich in einer zur Lockerung des Pressmittels (64) führenden Richtung bewegt, wobei die beiden Enden der vorgespannten Walze (34) jeweils durch zugeordnete Vorspannmittel vorgespannt sind, **dadurch gekennzeichnet, dass** die beiden Enden der vorgespannten Walze (34) unabhängig voneinander beweglich sind.

2. Rundballenpresse (10) nach Anspruch 1, wobei die Vorspannmittel Federn (60) umfassen.

3. Rundballenpresse nach Anspruch 1 oder 2, wobei die vorgespannte Walze (34) beidendig an jeweils einer Halterung (58) befestigt ist, die schwenkbar am Gestell (12) der Rundballenpresse (10) angelenkt und mit den Vorspannmitteln (64) gekoppelt sind.

4. Rundballenpresse (10) nach einem der Ansprüche 1 bis 3, wobei die Positionen der Enden der vorgespannten Walze (34) durch je einen Sensor (66) erfassbar sind, die mit einer Anzeigeeinrichtung (72) verbunden sind.

## Claims

1. Roundbaler (10) having a bale-pressing chamber (16) which is surrounded by a pressing means (64) in the form of a single pressing belt or a plurality of pressing belts arranged next to one another, wherein the pressing means (64) bears on a driveable roller (30) and on freely concomitantly running rollers (28, 32, 34, 36, 38, 40, 42, 62, 44, 22), of which at least one preloaded roller (34) is acted upon by preloading means for the purpose of tightening the pressing means in such a way that they preload the preloaded roller (34) to an ever more pronounced degree the further the latter moves in a direction leading to the loosening of the pressing means (64), wherein the two ends of the preloaded roller (34) are each preloaded by associated preloading means, **characterized in that** the two ends of the preloaded roller (34) are movable independently of one another.

2. Roundbaler (10) according to Claim 1, wherein the preloading means comprise springs (60).

3. Roundbaler (10) according to Claim 1 or 2, wherein the preloaded roller (34) is fastened at both ends to a respective holder (58), which holders are pivotably articulated on the frame (12) of the roundbaler (10) and coupled to the preloading means (64).

4. Roundbaler (10) according to one of Claims 1 to 3, wherein the positions of the ends of the preloaded roller (34) can be detected by a respective sensor (66), which sensors are connected to a display device (72).

## Revendications

1. Presse à balles rondes (10) comprenant une chambre de pressage de balle (16) qui est entourée par un moyen de pressage (64) se présentant sous la forme d'une courroie de pressage unique ou d'une pluralité de courroies de pressage juxtaposées, le moyen de pression (64) venant en appui sur un rouleau entraînable (30) et sur des rouleaux librement rotatifs (28, 32, 34, 36, 38, 40, 42, 62, 44, 22) dont au moins un rouleau précontraint (34) est sollicité par des moyens de précontrainte dans le sens de tension du moyen de pressage de manière à précontraindre le rouleau précontraint (34) d'autant plus fortement que celui-ci se déplace dans un sens de relâchement du moyen de pressage (64), les deux extrémités du rouleau précontraint (34) étant chacune précontraintes par des moyens de précontrainte associés, **caractérisée en ce que** les deux extrémités du rouleau précontraint (34) sont mobiles indépendamment l'une de l'autre.

2. Presse à balles rondes (10) selon la revendication 1, les moyens de précontrainte comprenant des ressorts (60) .

3. Presse à balles rondes selon la revendication 1 ou 2, le rouleau précontraint (34) étant fixé aux deux extrémités à un support respectif (58) qui est articulé de manière pivotante au bâti (12) de la presse à balles rondes (10) et qui est accouplé aux moyens de précontrainte (64).

4. Presse à balles rondes (10) selon l'une des revendications 1 à 3, les positions des extrémités du rouleau précontraint (34) pouvant être détectées par un capteur respectif (66) qui est relié à un dispositif d'affichage (72).
